# EUROPEAN PATENT SPECIFICATION

(11) **EP 2 664 691 B1**
(45) Date of publication and mention of the grant of the patent: **17.04.2019**
(21) Application number: 11851919.8
(22) Date of filing: 16.12.2011
(51) Int. Cl.: C23F 1/36, C23F 3/02, H01G 9/045, H01G 9/055, H01G 11/70

(54) **ETCHING AGENT FOR ALUMINIUM AND ALUMINIUM ALLOYS**
ÄTZMITTEL FÜR ALUMINIUM UND ALUMINIUMLEGIERUNGEN
AGENT DE GRAVURE POUR L'ALUMINIUM ET DES ALLIAGES D'ALUMINIUM

(30) Priority: 24.12.2010 JP 2010294793
(43) Date of publication of application: 20.11.2013
(73) Proprietor: Henkel AG & Co. KGaA, 40589 Düsseldorf (DE)
(72) Inventor: MORI, Kazuhiko, Tokyo 103-0027 (JP); TAKAKUWA, Hideki, Tokyo 103-0027 (JP); YOROZU, Takayuki, Tokyo 103-0027 (JP)
(86) International application number: PCT/JP2011/079955
(87) International publication number: WO 2012/086822

(56) References cited:
- WO-A1-2010/026876
- GB-A- 2 102 838
- JP-A- 50 120 444
- JP-A- 53 140 241
- JP-A- 2006 002 229
- JP-A- 2007 138 224
- JP-B- 50 009 732
- US-A- 2 882 134

## Description

### TECHNICAL FIELD

The present invention relates to a metal surface treatment technique. More specifically, the present invention relates to an etching technique for aluminum or aluminum alloy.

### BACKGROUND ART

Conversion to environmentally friendly technology is required in the aluminum surface treatment industry responding to the increased recent interest in environmental problems. Etching for aluminum or aluminum alloy is used for, for example, cleaning of the surface of a processed and molded aluminum as well as for pretreatment for coating or bonding, plating, and welding.

A surface of aluminum or aluminum alloy is covered with a stable oxidized film in neutrality. For performing etching, the oxidized film first needs to be dissolved. For this reason, an acidic agent containing hydrofluoric acid or a strong alkaline agent including sodium hydroxide has been generally used as an etching agent for the oxidized film.

By using the acidic etching agent, including a hydrofluoric acid, for aluminum or aluminum alloy, the oxidized film can be easily removed, and relatively uniform etching is possible. However, with respect to the acidic etching agent, handling is dangerous, and a wastewater treatment is difficult to perform. Therefore, there has been a problem in terms of environment and safety.

On the other hand, with respect to the alkaline etching agent without containing a fluorine compound, an etching agent containing strong alkali such as sodium hydroxide in a large amount and having a high pH has a high etching rate. However, this type of etching agent has had problems in that etching is not uniform, variations of an etching rate to an etching treatment temperature or time are large, and a safe treatment is difficult to perform.

Therefore, in order to perform alkaline and uniform etching, an etching agent including a high concentration of borate that is weak alkaline is sometimes used to perform an etching treatment at high temperature.

However, regulations for boron emissions are strengthened in recent years. For this reason, use of the etching agent including boron is also regulated, and costs for wastewater treatment increase. In view of the problems described above, there is a strong need for an environmentally friendly etching agent for aluminum without containing both boron and fluorine.

As a technique for satisfying such a requirement, Patent Document 1, for example, discloses a method of performing a treatment with an alkaline water-based cleaner as a cleaner for use in an aluminum plate and a can material. The alkaline water-based cleaner includes an alkali builder such as an alkali metal hydroxide and an alkali metal phosphate, an organic phosphonic acid, an aluminum ion sequestering agent, and a surfactant, and has a pH of 10 to 12. Also, Patent Document 2 discloses a technique of using an etching agent having a similar composition for a pretreatment for plating.

However, a treatment liquid having the above composition relatively shortens a time for removing an oxidized film, but hardly controls the reaction. For example, there has been a problem in that decrease of a treatment temperature significantly reduces etching performance. Also, there has been a problem in that accumulated aluminum ions reduce etching performance when the treatment is continued.

As an example of attempting to solve such problems, Patent Document 3 discloses a technique of using a composition containing a metal ion such as an aluminum ion and a calcium ion previously added therein, in addition to an organic phosphonic acid. In this technique, etching performance is unlikely to decline even when a treatment is continued.

In this case, stability of a treatment is somewhat improved. However, when an etching treatment is continued for a relatively long time, dissolved aluminum ions increase in concentration. Thus, there has been remained a problem that addition of aluminum or calcium as an ion is not enough to inhibit the decline of etching performance.

For this reason, problems in terms of an agent have remained until now. To compensate for the problems, an etching treatment liquid needs to be frequently renewed and thus excessive waste water is generated. For this reason, an environmental problem has been still remained. US-A-2 882 134, WO-A-2010/026876 and GB-A-2 102 838 also disclose alkaline etching agents for aluminium.

### PRIOR ART DOCUMENT

### PATENT DOCUMENT

Patent Document 1: JP 4-187788 A
Patent Document 2: JP 9-53182 A
Patent Document 3: JP 2005-97726 A

### DISCLOSURE OF THE INVENTION

### PROBLEMS TO BE SOLVED BY THE INVENTION

An object of the present invention is to solve the above problems in the conventional techniques. That is, an object of the present invention is to obtain a composition and a treatment method thereof, of an etching agent for aluminum or aluminum alloy. The etching agent does not contain a component not suitable for a wastewater treatment, such as boron and fluorine, and has stable etching performance even when performing an etching treatment continuously. The etching agent has excellent aging resistance, providing good etching uniformity and corrosion resistance after etching.

### SOLUTIONS TO THE PROBLEMS

The inventors have conducted extensive researches using surface analysis to a material subjected to corrosion behavior or etching treatment, of an aluminum or aluminum alloy material, in an aqueous etching solution having various compositions.

The inventors measured an etching rate of aluminum and aluminum alloy mainly in an alkaline region. As a result, the inventors have found the following facts: With a pH not higher than 10, stable etching property and a uniform etched surface are obtained. On the other hand, with a pH exceeding 10, etching proceeds in a partial and accelerated manner, and thus etching becomes difficult to control. Also, the etched surface becomes a non-uniform and coarsened surface.

To determine the cause, with respect to the surfaces of these aluminum materials after the etching treatment, the inventors observed their surface profiles using a field emission-type scanning electron microscope (FE-SEM), and performed surface analysis of their oxidized films using an X-ray photoelectron spectrometer (XPS). As a result, the inventors found that the above differences are attributable to whether or not dissolved aluminum ions formed a protective aluminum hydroxide thin film on each of these aluminum material surfaces.

That is, with a pH of 8 to 10, an etching reaction uniformly proceeds while the dissolved aluminum ions form a dense and protective aluminum hydroxide thin film. In contrast to this, with a pH exceeding 10, the aluminum hydroxide thin film is not formed. For this reason, etching occurs intensively in a site with a naturally oxidized film (an originally existing oxidized film) removed earlier. It was found that this phenomena leads to a non-uniform surface having many irregularities and poor corrosion resistance.

Based on these research results, the inventors have reached an idea that, in order to obtain a stable appropriate etching rate, aging resistance, and uniform and corrosion-resistant surface, an aqueous etching solution including an aminocarboxylic acid needs to have a pH of 8 to 10, and furthermore a composition having increased pH stability of a treatment liquid in this pH range and a buffering effect is necessary. Based on this idea, the inventors prototyped and extensively studied various etching agent compositions that do not contain a regulated substance such as boron and fluorine. As a result, the problems associated with the conventional techniques were solved in that uniform and stable etching and good corrosion resistance after etching were achieved. Thus, a technically completely novel etching agent for aluminum or aluminum alloy was accomplished. Confirmation has been made that the etching agent improves electrolytic solution resistance of an electrode foil for a secondary battery, and is also highly effective in inhibiting whisker occurrence in a welded part of a tab lead for an electrolytic condenser.

That is, the present invention provides the following (1) to (7):
(1) An aqueous etching solution with a pH of 8 to 10 that contains an etching agent for aluminum or aluminum alloy, including 50 parts by mass of an aminocarboxylic acid as component A, 5 to 300 parts by mass of at least one selected from a hydroxycarboxylic acid, a dicarboxylic acid, a polycarboxylic acid, and salts thereof as component B, and 10 to 800 parts by mass of at least one selected from a hydroxide, a carbonate, and a bicarbonate of an alkali metal as component C.
(2) The aqueous etching solution according to the above (1), wherein the aminocarboxylic acid is an α-amino acid.
(3) The aqueous etching solution according to the above (1) or (2), wherein at least one of the alkali metal is lithium.
(4) The aqueous etching solution according to any one of the above (1) to (3), further including at least one of polyvinylamine, polyallylamine, polyethyleneimine, and derivatives thereof.
(5) The aqueous etching solution according to any one of the above (1) to (4), further including crystalline aluminum hydroxide particles.
(6) The aqueous etching solution according to any one of the above (1) to (5), further including a surfactant.
(7) The aqueous etching solution according to any one of the above (1) to (6) wherein the components A , B and C have a concentration of 0.5 to 5% by mass in total.
(8) An etching method of aluminum or aluminum alloy, including etching aluminum or aluminum alloy by using an aqueous etching solution according to (7).

### EFFECTS OF THE INVENTION

According to the etching solution for aluminum or aluminum alloy of the present invention, etching proceeds while a protective film (an aluminum hydroxide thin film) on a surface is formed and regenerated, so that aluminum exerts its original corrosion resistance. Therefore, etching proceeds in a dense, uniform and stable manner, without a pit (an etching pit) caused by etching grown into a large pit. Thus, smut and dirt can uniformly be removed. At the same time, microscopic asperities not larger than several µm can be provided to a surface. Therefore, due to an anchor effect, a surface having excellent bondability and adhesion can be obtained. Furthermore, a surface after etching has excellent corrosion resistance. From the above, the etching solution can particularly suitably be used in a pretreatment for bonding, for example, to an electrode or a tab material of a battery or a condenser, and a pretreatment for coating with an active substance paste. Thus, the etching solution can achieve excellent effects in a surface treatment as a pre-bonding or pre-coating treatment of an aluminum foil or a tab material of a lithium-ion battery or a capacitor, and other aluminum components or members.

### DESCRIPTION OF EMBODIMENTS

Hereinafter, the etching agent used to make the aqueous etching solution for aluminum and aluminum alloy according to the present invention will be described in detail.

The etching agent can be supplied as a solid chemical agent without containing a solvent by primarily using a solid such as powder as a raw material. Alternatively, the etching agent can be supplied as a liquid chemical agent primarily including water as a solvent and having various components dissolved therein. In brief, the etching agent can be supplied as a so-called powder agent or liquid agent. In this case, the powder agent or the liquid agent does not always need to be provided as a single agent. A combination of two or more powder agents, a combination of two or more liquid agents, or a combination of two or more of powder agents and liquid agents may be also provided as a package. These agents may include a powder agent or a liquid agent exclusively or substantially used for adjusting pH. When the etching agent is a powder agent (the solid chemical agent), the power agent is dissolved or dispersed mainly using water as a solvent to prepare an aqueous etching solution as an aqueous solution of an etching agent. Thus, the resulting aqueous etching solution can be provided for actual etching. When the etching agent is a liquid agent (the liquid chemical agent), the liquid agent is diluted mainly using water as a solvent to prepare an aqueous etching solution as an aqueous solution of an etching agent. Thus, the resulting aqueous etching solution can be provided for actual etching.

In an aspect of the etching agent for aluminum and aluminum alloy the etching agent includes an aminocarboxylic acid, at least one selected from a hydroxycarboxylic acid, a dicarboxylic acid, a polycarboxylic acid, and salts thereof, and at least one selected from a hydroxide, a carbonate, and a bicarbonate of an alkali metal. In addition, an aqueous solution of the etching agent (aqueous etching solution) needs to have a pH of 8 to 10.

These essential components need to have a composition ratio of 5 to 300 parts by mass of at least one selected from a hydroxycarboxylic acid, a dicarboxylic acid, a polycarboxylic acid, and salts thereof, and 10 to 800 parts by mass of at least one selected from a hydroxide, a carbonate, and a bicarbonate of an alkali metal, to 50 parts by mass of an aminocarboxylic acid. That is, the etching agent for aluminum and aluminum alloy is an etching agent for aluminum and aluminum alloy including an aminocarboxylic acid (Component A), at least one selected from a hydroxycarboxylic acid, a dicarboxylic acid, a polycarboxylic acid, and salts thereof (Component B), and at least one selected from a hydroxide, a carbonate, and a bicarbonate of an alkali metal (Component C). These components have a composition ratio of 5 to 300 parts by mass of Component B and 10 to 800 parts by mass of Component C when Component A is 50 parts by mass. In addition, an etching solution serving as an aqueous solution of the etching agent has a pH of 8 to 10.

In the present invention, the type of a usable aminocarboxylic acid is not particularly limited. For example, an aminocarboxylic acid such as an ethylenediaminetetraacetic acid and a nitrilotriacetic acid can also be used. However, among aminocarboxylic acids, an α-amino acid is more preferred. Here, the α-amino acid refers to "an amino acid having an amino group bonded to a carbon atom in the α-position, its carbon atom bonded to a carboxyl group, and having a structure of RCH(NH₂)COOH. An α-amino acid is more preferred because the α carbon in the α-amino acid is bonded to an electron-withdrawing carboxyl group. For this reason, an amino group bonded to the same carbon easily liberates a proton, and has a pKa of approximately 9 to 10 being smaller than other amines. It is estimated that this is because a good pH buffering effect can be obtained in a pH range of 8 to 10.

Also, an α-amino acid has a chelating effect (ion sequestration capacity) on an alloy component, such as copper, of an aluminum material. However, an α-amino acid has a weak chelating effect (ion sequestration capacity) on an aluminum ion. Therefore, an α-amino acid is also particularly preferred in that an aluminum hydroxide protective film having good corrosion resistance is not inhibited from being formed on the surface of an aluminum or aluminum alloy material.

Here, examples of a preferred α-amino acid include lysine, alanine, glycine, an aspartic acid, a glutamic acid, cysteine, leucine, isoleucine, arginine, serine and tyrosine. Among these, lysine, alanine and glycine are preferred, and lysine and glycine are more particularly preferred.

A certain carboxylic acid compound having an aluminum-ion sequestration capacity, that is at least one selected from a hydroxycarboxylic acid, a dicarboxylic acid, a polycarboxylic acid, and salts thereof, needs to have a formulation amount of 5 to 300 parts by mass of at least one selected from a hydroxycarboxylic acid, a dicarboxylic acid, a polycarboxylic acid, and salts thereof in total, to 50 parts by mass of an aminocarboxylic acid. The total less than 5 parts by mass is not preferred since aluminum hydroxide sludge is likely to be generated. The total exceeding 300 parts by mass is not preferred since a wastewater treatment becomes burdensome. Of the above formulation amount, in view of aluminum-ion sequestration capacity, 7 to 50 parts by mass is preferred, and 10 to 30 parts by mass is more particularly preferred.

Among an aluminum ion sequestering agent of at least one selected from a hydroxycarboxylic acid, a dicarboxylic acid, a polycarboxylic acid, and salts thereof, a hydroxycarboxylic acid is more preferred. As a hydroxycarboxylic acid, a gluconic acid, a tartaric acid, a malic acid, a citric acid, a glycolic acid and a lactic acid are preferred. As a dicarboxylic acid, a succinic acid, a malonic acid, an oxalic acid and a phthalic acid are preferred. As a polycarboxylic acid, a polyacrylic acid and a polymaleic acid are preferred. A gluconic acid, a citric acid and a tartaric acid are particularly preferred. These are preferably added as an alkali metal salt, and examples of an alkali metal include Li, Na and K.

At least one selected from a hydroxide, a carbonate, and a bicarbonate of an alkali metal needs to have a formulation amount of 10 to 800 parts by mass in total thereof, to 50 parts by mass of an aminocarboxylic acid. With a formulation amount of smaller than 10 parts by weight, an aqueous etching solution hardly maintains alkaline pH. With a formulation amount exceeding 800 parts by weight, an aminocarboxylic acid has a reduced formulation ratio, thereby reducing a pH buffering effect. Accordingly, etching uniformity or etching stability, for example, is reduced. Therefore, the formation amount exceeding 800 parts by is not preferred. Of the above formulation amount, in view of maintaining an optimum pH, 30 to 500 parts by mass is preferred, and 50 to 300 parts by mass is more particularly preferred.

As an alkali metal type, Li is most preferred, and Na and K are next preferred. Li is used because etching proceeds at an increased rate, and aluminum or aluminum alloy after etching has improved corrosion resistance. With a pH of 8 to 10, a formulation ratio among a hydroxide, a carbonate, and a bicarbonate is not particularly limited. Incidentally, it is preferred that an alkali metal hydroxide be used in case of a relatively high formation ratio of an aminocarboxylic acid, while a bicarbonate is used in case of a relatively low formation ratio of an aminocarboxylic acid.

An aqueous etching solution to be provided for actual etching needs to have a pH of 8 to 10. These essential components (Components A, B and C) are adjusted to have a concentration (hereinafter, referred to as an etching concentration) of, typically 0.5 to 5% by mass (0. 5 to 50 g/L), more practically 1 to 3% by mass (10 to 30 g/L) in total. When the etching agent is a solid agent, the solid agent is dissolved and diluted in water as a solvent. When the etching agent is a liquid agent, the liquid agent is diluted in water as a solvent. The aqueous etching solution more preferably has a pH of 8.5 to 9.8. When the aqueous etching solution has a pH of lower than 8, etching proceeds at a low rate, causing insufficient etching. Therefore, performance required for the etching agent, including etching uniformity, stability, aging resistance, corrosion resistance and adhesion, is reduced in general. Especially, a fault occurs in that etching stability and adhesion are reduced. On the other hand, when the aqueous etching solution has a pH exceeding 10, etching excessively proceeds, causing reduced performance similarly to the above. Especially, a fault occurs in that etching uniformity and aging resistance are reduced. The pH of an aqueous etching solution is changed primarily by changing a formation ratio among a hydroxide, a carbonate, and a bicarbonate of an alkali metal.

The etching agent according to the present invention may further include nitrate or nitrite. Nitrate or nitrite increases an etching reaction rate that is an etching rate, and inhibits generation of hydrogen gas, thereby enabling more uniform etching. At the same time, nitrate or nitrite improves corrosion resistance of an aluminum surface after etching. The nitrate or nitrite is preferably formulated as a salt of an alkali metal such as Na, K and Li.

On the other hand, an oxidizer quite stronger than nitrate or nitrite for example, a peroxosulfuric acid or a hydrogen peroxide, is not preferred, because such an oxidizer oxidizes an amino group of an aminocarboxylic acid thereby to reduce the effects of the present invention.

Also, the etching agent preferably contains a surfactant in an amount of 2 to 100 parts by mass to 50 parts by mass of an aminocarboxylic acid. By formulating a surfactant, an etching effect is increased. By formulating a surfactant, compared to an etching agent without a surfactant added therein, etching stability or corrosion resistance as well as adhesion is improved. Furthermore, pre-etching becomes unnecessary, thereby to have an effect of shortening a production process.

A surfactant type is not particularly limited. As a surfactant, there can preferably be used a nonionic surfactant such as polyoxyethylene/propylene alkyl ether or fatty acid alkanolamide and polyoxyethylene fatty acid ester; anionic surfactant such as a higher alcohol sulfuric acid ester salt or polyoxyethylene alkyl ether sulfate; and a cationic surfactant such as an alkyl methyl ammonium salt, as well as an alkyl amino fatty acid salt such as N-alkyl-β-alanine; and an amphoteric surfactant such as alkylbetaine.

The etching agent preferably further includes at least one selected from polyvinylamine, polyallylamine, and polyethyleneimine, or a derivative thereof. These are adsorbed to a microscopic cathode portion of an aluminum or aluminum alloy surface to inhibit generation of hydrogen gas, thereby facilitating a more uniform etching reaction. Therefore, especially, even when an alloy component having a different corrosion potential exists in the material, uniform etching can be performed. For this reason, etching uniformity is good, and also corrosion resistance, adhesion and the like improve. A preferred formulation amount thereof is 0.5 to 30 parts by mass to 50 parts by mass of an aminocarboxylic acid.

Also, the etching agent more preferably further includes crystalline aluminum hydroxide particles. Among conventionally known etching agent compositions, there is a composition including a soluble salt such as an aluminum salt added therein to previously adjust aluminum to or around a saturated concentration, thereby attempting to obtain stable etching from an initial stage. However, as a result of experiments conducted by the inventors, no crystal nucleus of aluminum hydroxide is present in this method. Thus, sludge of gel-like amorphous aluminum hydroxide is easily generated. In this case, it has been found that not only attachment of sludge becomes a problem, but also continued etching causes inhibition of etching. On the contrary, by previously adding the crystalline aluminum hydroxide particles, excessive aluminum ions eluted by etching are immediately incorporated in the crystalline aluminum hydroxide particles and are removed. Therefore, a stable etching amount can be obtained from an initial stage of use. At the same time, a treatment liquid without a suspended matter can be provided. Thus, the aqueous etching solution has excellent corrosion resistance and adhesion, as well as particularly excellent etching stability and aging resistance.

In the present invention, as a crystalline aluminum hydroxide type, gibbsite [Al(OH)₃] or boehmite [AlOOH] is preferably used. A preferred average particle size thereof is 1 to 300 µm. A preferred formulation amount of crystalline aluminum hydroxide is 0.5 to 30 parts by mass to 50 parts by mass of an aminocarboxylic acid.

As aluminum or aluminum alloy suitable as an object subjected to an etching treatment in the present invention, for example, aluminum or aluminum alloy having a relatively high purity, such as JIS 1000 to 8000 series aluminum alloy, is more preferred. Other aluminum alloy plate material, alloy for die casting such as ADC-12, and aluminum alloy for casting such as AC-8C and AC-4C can also be applied.

Although a member and an application applicable by the present invention are not particularly limited, a pretreatment of a member to be coated or a member to be bonded, made up of aluminum or aluminum alloy, is particularly suitable. For example, a pretreatment for resin laminating of aluminum foil, or a pretreatment for bonding of an aluminum member and rubber is suitable in use. Other than these, as a pretreatment of Ni plating of an aluminum sliding member such as an engine block or a piston and a bearing of a two-wheeled vehicle, adhesion or corrosion resistance can be improved. Furthermore, the etching agent according to the present invention can be used as an etching agent for a pretreatment for bonding and connecting with respect to a printed circuit board or a heat dissipating board. Also, the etching agent can be used as an etching agent for a lead tab material of a lithium-ion battery, a condenser and a capacitor. The lead tab material improves adhesion of an active substance paste relating to an aluminum foil for a power collector, and has a whisker inhibiting effect.

The etching agent is adjusted and diluted with a solvent such as water, so that the etching agent has an etching concentration of 0. 5% to 5% by mass, more practically 1 to 3% by mass. An aqueous solution of the etching agent according to the present invention as an aqueous etching solution is preferably used to perform a contact treatment of an aluminum or aluminum alloy member as a material to be treated at 50 to 100°C for 1 to 30 minutes. When a carbonate or a bicarbonate of an alkali metal has a relatively low formulation amount, the etching agent can be used even at an upper limit temperature up to 100°C. A treatment method is not particularly limited, including immersion, spraying, or flowing. When omitting degreasing and etching processes, the composition preferably includes a surfactant. After etching, water rinsing is preferably performed to rinse a treatment liquid away. After water rinsing is performed, heat drying is preferably performed at 40 to 200°C to remove unnecessary adsorbed water.

### EXAMPLES

The present invention will be specifically described with reference to examples below. However, the present invention is not limited to these examples.

### (Preparation of aqueous etching solution)

The etching agents used in Examples 1 to 17 and Comparative examples 1 to 7 were prepared by using products equivalent to JIS first grade reagents. Each agent powder having a combination shown in Tables 1 and 2 was prepared in an amount of 50 g. The prepared etching agent was dissolved in deionized water to prepare an aqueous etching solution having an etching concentration of 1% by mass that is 10 g/L. Then, pH of the prepared solution was measured.

### (Surfactant)

As a nonionic surfactant, polyoxyethylene lauryl ether (HLB is 12) was used. As an anionic surfactant, polyoxyethylene sodium lauryl sulfate (manufactured by New Japan Chemical Co., Ltd.) was used. As a cationic surfactant, diethylaminoethylstearamide (CATINAL AEAK manufactured by Toho Chemical Industry Co., Ltd.) was used. Also, as an amphoteric surfactant, carboxymethylamine (NISSAN Anon LA manufactured by Nof Corporation) was used.

### (Polyamine)

In Example 9, as polyamine, 5 parts by mass of polyallylamine (PA-01 manufactured by Nitto Boseki Co., Ltd.) was further added. In Example 10, 5 parts by mass of polyethyleneimine (EPOMIN SP-006 manufactured by Nippon Shokubai Co., Ltd.) was further added. In Example 13, 5 parts by mass of polyvinylamine (manufactured by BASF Corporation) was further added.

### (Aluminum compound)

In Example 2, Example 3, and Examples 11 to 17, 1 part by mass of crystalline aluminum hydroxide powders (crystal type is gibbsite, average particle size is 50 µm, manufactured by Nippon Light Metal Co., Ltd.) was further added as crystalline aluminum hydroxide particles. Also, in Comparative example 4, 3 parts by mass of an aqueous sodium aluminate solution (20% in terms of Al₂O₃, manufactured by Asada Chemical Industry Co., Ltd.) without crystalline aluminum particles contained therein was added.

### (Performance test)

### 1. Evaluation of etching uniformity

As a metal material to be treated, two types of test plates (70 × 75 mm, plate thickness is 1 mm) of pure aluminum (JIS A1085) and aluminum alloy (JIS A5052) were used. These materials as a test plate were immersed in acetone to remove attached oil content. Thereafter, immersion etching was performed for 5 minutes using an aqueous etching solution having a component shown in Tables 1 and 2, and heated to 75°C. The test plate after etching was immediately rinsed under running water for 30 seconds, ant then dried. A surface of the dried test plate was observed using a metal microscope at a magnification of 1000 times. Then, an area ratio (%) of an unetched part observed as a shining part was visually measured. In evaluation, 5 points were assigned when no shining part was observed, 4 points when an unetched part was slightly observed at less than 5%, and 3 points when an unetched part was observed at 5 to less than 20%. Furthermore, 2 points were assigned when an unetched part was observed at 20 to less than 50%, and 1 point when not less than 50%.

### 2. Evaluation of etching stability

Etching stability was evaluated by performing mass measurement of aluminum eluted by etching for 10 minutes at temperatures of 60°C and 85°C. A pure aluminum plate was degreased with acetone, and then mass measurement of the degreased test plate was performed using a precision balance. Thereafter, each of the test plates was subjected to etching by using an aqueous etching solution having a component shown in Tables 1 and 2 for 10 minutes. The test plate after etching was immediately rinsed with water, dried at 80°C for 5 minutes, and air cooled to room temperature in a desiccator. Afterward, mass measurement was performed again, and an amount (g/m²) reduced by etching was calculated from a difference in mass between before and after etching. Stability of an etching amount was determined by calculating a mass ratio of [etching reduced amount at 60°C] / [etching reduced amount at 85°C]. The higher the calculated value is, the better etching stability is.

### 3. Evaluation of etching aging resistance

Immediately after preparing an aqueous etching solution, the etching amount (A g/m²) when etching a 1dm² pure aluminum plate at 75°C for 10 minutes was measured. Furthermore, etching for 10 minutes was performed with a 10 dm² pure aluminum plate per 1 L of an aqueous etching solution. Thereafter, an etching amount (B g/m²) was measured at the same condition, and a ratio of B/A was calculated, so that aging resistance was evaluated. Then, a determination was made that the higher B/A is, the better aging resistance is. Also, a state (whether or not sludge or a suspended matter exists) of this aqueous etching solution was observed.

### 4. Evaluation of corrosion resistance after etching

A test plate after etching was subjected to a salt spray test (JIS Z 2371) for 72 hours, and a degree of rusting and discoloration was determined. In evaluation of corrosion resistance, 5 points were assigned when an area of white rust is less than 5%, and 4 points when an area of white rust is 5 to less than 10%. Furthermore, 3 points were assigned when an area of white rust or black discoloration is 10% to less than 30%, 2 points when 30% to less than 50%, and 1 point when not less than 50%.

### 5. Evaluation of adhesion after etching

In order to evaluate, for example, adhesion with plastics or rubber, or adhesion with an electrode paste for a battery, a water-based paste for a lithium-ion battery positive electrode was prepared. The water-based paste had corrosion resistance to an aluminum material. This paste was applied on a surface of an aluminum foil after etching, and dried. Then, a test on adhesion of the paste-coated film was conducted. Here, with respect to the water-based paste, an Ni-Mn-Co ternary system (LiNi_{0. 33}Mn_{0. 33}Co_{0. 33}O₂) was used as an active substance. To 100 parts by mass of this active substance, 5 parts by mass of acetylene black as a conducting agent, 1 part by mass of PVDF particles as a binder, and 1 part by mass of carboxymethylcellulose as a thickening agent were added and dispersed in water. The mixture was further mixed using a bead mill, thereby to be adjusted to have a solid content concentration of approximately 35% by mass. The paste had a pH of approximately 10. The prepared active substance was applied on a surface of an aluminum foil using a bar coater so as to have 50g /m² per one side, and then heated and dried at 100°C. Then, a cellophane adhesive tape was adhered thereto, and a peeling test was conducted. Thus, evaluation was made whether or not peeling occurred. In evaluation, 5 points were assigned when no peeling was observed, 4 points when dot-like peeling was partly observed (less than 5%), 3 points when peeling was observed at 5 to 20%, 2 points when peeling was observed at more than 20 to 50%, and 1 point when peeling was observed at more than 50%.

The test result is shown in Table 3. Table 3 clearly shows that, in Examples 1 to 17, etching uniformity is excellent, etching stability and aging resistance at etching as well as corrosion resistance after etching is excellent, and adhesion with a coated film is excellent. With respect to aging resistance, a suspended material was not observed in Examples 2 to 3 and Examples 11 to 17 containing crystalline aluminum hydroxide particles. On the contrary, a large amount of aluminum hydroxide sludge was observed in Comparative example 4 and Comparative example 7. Compared to these Examples, it is clearly shown that, in Comparative examples 1 to 7, etching uniformity is generally reduced, and etching stability and etching aging resistance as well as corrosion resistance after etching and adhesion with a coated film are poor.

As is clear from the above result, by using the etching agent according to the present invention, etching by using an aqueous etching solution has excellent uniformity, stability and aging resistance. Furthermore, aluminum or aluminum alloy having excellent corrosion resistance and adhesion after etching can be obtained.

**[Table 1] Etching agent component 1**

| No. | AMINOCARBOXYLIC ACID (COMPONENT A) (PARTS BY MASS) | CARBOXYLIC ACID COMPONENT (COMPONENT B) (PARTS BY MASS) | ALKALI METAL COMPOUND (COMPONENT C) (PARTS BY MASS) |
|---|---|---|---|
| EXAMPLE 1 | LYSINE (50) | SODIUM CITRATE (20) | SODIUM HYDROXIDE (22) |
| EXAMPLE 2 | GLUTAMIC ACID (50) | SODIUM GLUCONATE (15) | POTASSIUM HYDROXIDE (18) |
| EXAMPLE 3 | GLYCINE (50) | SODIUM TARTRATE (10) | LITHIUM HYDROXIDE (13) |
| EXAMPLE 4 | ASPARTIC ACID (50) | SODIUM LACTATE (30) | SODIUM CARBONATE (100) |
| EXAMPLE 5 | ALANINE (50) | CITRIC ACID (6) | SODIUM BICARBONATE (150) |
| EXAMPLE 6 | PHENYLALANINE (50) | MALIC ACID (150) | SODIUM BICARBONATE (130) |
| EXAMPLE 7 | CYSTEINE (50) | GLYCOLIC ACID (15) | SODIUM HYDROXIDE (50) |
| EXAMPLE 8 | GLYCINE (50) | SODIUM GLUCONATE (30) | SODIUM HYDROXIDE (35) |
| EXAMPLE 9 | ALANINE (50) | SODIUM CITRATE (80) | SODIUM CARBONATE (220) |
| EXAMPLE 10 | LYSINE (50) | TARTARIC ACID (150) | SODIUM CARBONATE (650) |
| EXAMPLE 11 | ASPARTIC ACID (50) | SODIUM SUCCINATE (250) | LITHIUM HYDROXIDE (80) |
| EXAMPLE 12 | GLYCINE (50) | SODIUM GLUCONATE (60) | LITHIUM CARBONATE (40) |
| EXAMPLE 13 | LYSINE (50) | LACTIC ACID (8) | SODIUM BICARBONATE (500) + SODIUM CARBONATE (100) |
| EXAMPLE 14 | ALANINE (50) | GLUCONIC ACID (150) | SODIUM CARBONATE (750) |
| EXAMPLE 15 | GLYCINE (50) | SODIUM GLUCONATE (10) | SODIUM CARBONATE (220) |
| EXAMPLE 16 | LYSINE (50) | LITHIUM OXALATE (30) | LITHIUM CARBONATE (40) |
| EXAMPLE 17 | LYSINE (50) | POLYACRYLIC ACID (25) | SODIUM HYDROXIDE (30) |
| COMPARATIVE EXAMPLE 1 | - | SODIUM TRIPOLYPHOSPHATE (50) | SODIUM BORATE (500) |
| COMPARATIVE EXAMPLE 2 | LYSINE (50) | SODIUM TARTRATE (400) | SODIUM CARBONATE (950) |
| COMPARATIVE EXAMPLE 3 | - | SODIUM PYROPHOSPHATE (100) | SODIUM BICARBONATE (500) + SODIUM CARBONATE (100) |
| COMPARATIVE EXAMPLE 4 | GLYCINE (50) | SODIUM ACETATE (50) | SODIUM HYDROXIDE (35) |
| COMPARATIVE EXAMPLE 5 | GLYCINE (50) | SODIUM GLUCONATE (10) | SODIUM CARBONATE (120) |
| COMPARATIVE EXAMPLE 6 | GLYCINE (50) | SODIUM GLUCONATE (10) | SODIUM HYDROXIDE (250) |
| COMPARATIVE EXAMPLE 7 | LYSINE (50) | SODIUM CITRATE (2) | SODIUM HYDROXIDE (7) |

Remarks: An etching agent includes a component shown in Table 1 or 2.

**[Table 2] Etching agent component 2 and pH of aqueous etching solution**

| No. | SURFACTANT (PARTS BY MASS) | POLYAMINE, ALUMINUM COMPOUND (PARTS BY MASS) | pH |
|---|---|---|---|
| EXAMPLE 1 | NONIONIC (80) | - | 9.2 |
| EXAMPLE 2 | - | CRYSTALLINE ALUMINUM HYDROXIDE PARTICLES (1) | 9.1 |
| EXAMPLE 3 | CATIONIC (60) | CRYSTALLINE ALUMINUM HYDROXIDE PARTICLES (1) | 9.0 |
| EXAMPLE 4 | ANIONIC (30) | - | 9.3 |
| EXAMPLE 5 | AMPHOTERIC (150) | - | 8.6 |
| EXAMPLE 6 | - | - | 8.3 |
| EXAMPLE 7 | NONIONIC (60) | - | 9.3 |
| EXAMPLE 8 | ANIONIC (25) | - | 9.6 |
| EXAMPLE 9 | CATIONIC (60) | POLYALLYLAMINE (5) | 9.4 |
| EXAMPLE 10 | NONIONIC (120) | POLYETHYLENEIMINE (5) | 9.9 |
| EXAMPLE 11 | AMPHOTERIC (80) | CRYSTALLINE ALUMINUM HYDROXIDE PARTICLES (1) | 9.6 |
| EXAMPLE 12 | AMPHOTERIC (80) | CRYSTALLINE ALUMINUM HYDROXIDE PARTICLES (1) | 8.9 |
| EXAMPLE 13 | NONIONIC (80) | POLYVINYLAMINE (5) + CRYSTALLINE ALUMINUM HYDROXIDE PARTICLES (1) | 9.2 |
| EXAMPLE 14 | NONIONIC (80) | CRYSTALLINE ALUMINUM HYDROXIDE PARTICLES (1) | 9.4 |
| EXAMPLE 15 | NONIONIC (120) | CRYSTALLINE ALUMINUM HYDROXIDE PARTICLES (1) | 9.5 |
| EXAMPLE 16 | ANIONIC (40) | CRYSTALLINE ALUMINUM HYDROXIDE PARTICLES (1) | 8.8 |
| EXAMPLE 17 | CATIONIC (200) | CRYSTALLINE ALUMINUM HYDROXIDE PARTICLES (1) | 9.4 |
| COMPARATIVE EXAMPLE 1 | NONIONIC (80) | - | 9.2 |
| COMPARATIVE EXAMPLE 2 | NONIONIC (60) | - | 11.2 |
| COMPARATIVE EXAMPLE 3 | NONIONIC (80) | - | 10.2 |
| COMPARATIVE EXAMPLE 4 | NONIONIC (60) | AQUEOUS SODIUM ALUMINATE SOLUTION (3) | 9.3 |
| COMPARATIVE EXAMPLE 5 | NONIONIC (120) | - | 7.3 |
| COMPARATIVE EXAMPLE 6 | NONIONIC (120) | - | 10.9 |
| COMPARATIVE EXAMPLE 7 | NONIONIC (60) | - | 8.2 |

**[Table 3] Result**

| No. | ETCHING UNIFORMITY | ETCHING STABILITY | AGING RESISTANCE | CORROSION RESISTANCE | ADHESION |
|---|---|---|---|---|---|
| EXAMPLE 1 | 5 | 0.52 | 0.95 | 4 | 4 |
| EXAMPLE 2 | 5 | 0.58 | 0.96 | 4 | 4 |
| EXAMPLE 3 | 5 | 0.59 | 0.97 | 5 | 5 |
| EXAMPLE 4 | 5 | 0.52 | 0.96 | 4 | 4 |
| EXAMPLE 5 | 5 | 0.51 | 0.95 | 4 | 4 |
| EXAMPLE 6 | 5 | 0.50 | 0.94 | 4 | 4 |
| EXAMPLE 7 | 5 | 0.48 | 0.95 | 4 | 4 |
| EXAMPLE 8 | 5 | 0.47 | 0.93 | 4 | 4 |
| EXAMPLE 9 | 5 | 0.49 | 0.94 | 5 | 5 |
| EXAMPLE 10 | 5 | 0.52 | 0.95 | 5 | 5 |
| EXAMPLE 11 | 5 | 0.56 | 0.97 | 5 | 5 |
| EXAMPLE 12 | 5 | 0.56 | 0.98 | 5 | 5 |
| EXAMPLE 13 | 5 | 0.57 | 0.97 | 5 | 5 |
| EXAMPLE 14 | 5 | 0.56 | 0.96 | 5 | 5 |
| EXAMPLE 15 | 5 | 0.61 | 0.98 | 5 | 5 |
| EXAMPLE 16 | 5 | 0.58 | 0.97 | 5 | 5 |
| EXAMPLE 17 | 5 | 0.59 | 0.98 | 5 | 5 |
| COMPARATIVE EXAMPLE 1 | 4 | 0.12 | 0.84 | 3 | 4 |
| COMPARATIVE EXAMPLE 2 | 4 | 0.17 | 0.87 | 3 | 3 |
| COMPARATIVE EXAMPLE 3 | 3 | 0.14 | 0.87 | 3 | 3 |
| COMPARATIVE EXAMPLE 4 | 4 | 0.18 | 0.89 | 3 | 3 |
| COMPARATIVE EXAMPLE 5 | 3 | 0.18 | 0.78 | 3 | 2 |
| COMPARATIVE EXAMPLE 6 | 2 | 0.31 | 0.75 | 3 | 3 |
| COMPARATIVE EXAMPLE 7 | 2 | 0.16 | 0.72 | 3 | 2 |

### INDUSTRIAL APPLICABILITY

The etching agent according to the present invention can be used in a field where aluminum or aluminum alloy is widely applied. The etching agent according to the present invention is suitable for a pretreatment for bonding resin or rubber, or coating, a pretreatment for applying a paste, and a pretreatment for plating or anodization. The etching agent according to the present invention is expected to be especially applied to aluminum electronic parts and battery components, such as a power collecting foil or a tab lead for a battery and a condenser.

## Claims

1. An aqueous etching solution with a pH of 8 to 10 that contains an etching agent for aluminum or aluminum alloy, the agent comprising:
50 parts by mass of an aminocarboxylic acid as Component A;
5 to 300 parts by mass of at least one selected from a hydroxycarboxylic acid, a dicarboxylic acid, a polycarboxylic acid, and salts thereof as Component B; and
10 to 800 parts by mass of at least one selected from a hydroxide, a carbonate, and a bicarbonate of an alkali metal as Component C.

2. The aqueous etching solution according to claim 1, wherein the aminocarboxylic acid is an α-amino acid.

3. The aqueous etching solution according to claim 1 or 2, wherein at least one of the alkali metal is lithium.

4. The aqueous etching solution according to any one of claims 1 to 3, the etching agent further comprising at least one of polyvinylamine, polyallylamine, polyethyleneimine, and derivatives thereof.

5. The aqueous etching solution according to any one of claims 1 to 4, the etching agent further comprising crystalline aluminum hydroxide particles.

6. The aqueous etching solution according to any one of claims 1 to 5, the etching agent further comprising a surfactant.

7. The aqueous etching solution according to any one of claims 1 to 6, wherein the components A, B and C have a concentration of 0.5 to 5% by mass in total.

8. An etching method of aluminum or aluminum alloy, comprising etching aluminum or aluminum alloy by using an aqueous etching solution according to claim 7.

## Patentansprüche

1. Wässrige Ätzlösung mit einem pH-Wert von 8 bis 10, die ein Ätzmittel für Aluminium oder eine Aluminiumlegierung enthält, wobei das Mittel Folgendes umfasst:
50 Massenteile einer Aminokarbonsäure als Komponente A;
5 bis 300 Massenteile von mindestens einem, aus einer Hydroxykarbonsäure, einer Dikarbonsäure, einer Polykarbonsäure und Salzen davon ausgewählt, als Komponente B; und
10 bis 800 Massenteile von mindestens einem, aus einem Hydroxid, einem Karbonat und einem Bikarbonat eines Alkalimetalls ausgewählt, als Komponente C.

2. Wässrige Ätzlösung nach Anspruch 1, wobei die Aminokarbonsäure eine α-Aminosäure ist.

3. Wässrige Ätzlösung nach Anspruch 1 oder 2, wobei mindestens eines des Alkalimetalls Lithium ist.

4. Wässrige Ätzlösung nach einem der Ansprüche 1 bis 3, wobei das Ätzmittel ferner mindestens eines von Polyvinylamin, Polyallylamin, Polyethylenimin und Derivaten davon umfasst.

5. Wässrige Ätzlösung nach einem der Ansprüche 1 bis 4, wobei das Ätzmittel ferner kristalline Aluminiumhydroxidpartikel umfasst.

6. Wässrige Ätzlösung nach einem der Ansprüche 1 bis 5, wobei das Ätzmittel ferner ein Tensid umfasst.

7. Wässrige Ätzlösung nach einem der Ansprüche 1 bis 6, wobei die Komponenten A, B und C insgesamt eine Konzentration von 0,5 bis 5 Masse-% aufweisen.

8. Ätzverfahren von Aluminium oder einer Aluminiumlegierung, umfassend das Ätzen von Aluminium oder einer Aluminiumlegierung unter Verwendung einer wässrigen Ätzlösung nach Anspruch 7.

## Revendications

1. Solution de gravure aqueuse avec un pH de 8 à 10 qui contient un agent de gravure pour l'aluminium ou un alliage d'aluminium, l'agent comprenant :
50 parties en masse d'un acide aminocarboxylique en tant que constituant A ;
5 à 300 parties en masse d'au moins un élément choisi parmi un acide hydroxycarboxylique, un acide dicarboxylique, un acide polycarboxylique et des sels de ceux-ci en tant que constituant B ; et
10 à 800 parties en masse d'au moins un élément choisi parmi un hydroxyde, un carbonate et un bicarbonate d'un métal alcalin en tant que constituant C.

2. Solution de gravure aqueuse selon la revendication 1, dans laquelle l'acide aminocarboxylique est un acide α-aminé.

3. Solution de gravure aqueuse selon la revendication 1 ou 2, dans laquelle au moins un du métal alcalin est du lithium.

4. Solution de gravure aqueuse selon l'une quelconque des revendications 1 à 3, l'agent de gravure comprenant au moins un élément parmi la polyvinylamine, la polyallylamine, la polyéthylèneimine et des dérivés de celles-ci.

5. Solution de gravure aqueuse selon l'une quelconque des revendications 1 à 4, l'agent de gravure comprenant en outre des particules d'hydroxyde d'aluminium cristallin.

6. Solution de gravure aqueuse selon l'une quelconque des revendications 1 à 5, l'agent de gravure comprenant en outre un tensioactif.

7. Solution de gravure aqueuse selon l'une quelconque des revendications 1 à 6, dans laquelle les constituants A, B et C ont une concentration de 0,5 à 5 % en masse au total.

8. Procédé de gravure d'aluminium ou d'alliage d'aluminium, comprenant la gravure d'aluminium ou d'alliage d'aluminium en utilisant une solution de gravure aqueuse selon la revendication 7.
